# EUROPEAN PATENT APPLICATION

(11) **EP 2 230 420 A1**
(43) Date of publication of application: **22.09.2010**
(21) Application number: 09425185.7
(22) Date of filing: 13.05.2009
(51) Int. Cl.: F16H 1/22, F16H 3/08

(54) **A rotation input and output system for two concentric shafts**

(30) Priority: 18.03.2009 IT PR20090016
(71) Applicant: G.F. S.p.A., 43040 Solignano (Parma) (IT)
(72) Inventor: Serventi, Franco, Frazione Viazzano 43040 Varano de' Melegari (Parma) (IT)
(74) Representative: Gotra, Stefano

(57) **Abstract**

A rotation input and output system for two concentric shafts (1,2) wherein engagement or disengagement is achieved by means of a pneumatic aid (P) and a single rotating shaft (11) is used to input the motion, which divides into two within the system on concentric shafts (1,2) with the possibility of disengagement or engagement.

## Description

### FIELD OF THE INVENTION

The invention relates to a rotation input and output system for two concentric shafts.

### BACKGROUND ART

At present there already exist devices for the engagement and disengagement of two concentric shafts, such devices operating by means of complex kinematic mechanisms and/or using chains to drive the different shafts.

### DISCLOSURE AND ADVANTAGES OF THE INVENTION

The object of the present invention is to provide the art with a rotation input and output system for two concentric shafts which is simple to construct. In particular, it is an object of the present invention to significantly reduce the presence of leverages and transmission chains.

Another object of the present invention is to devise a rotation input and output system for two concentric shafts that is extremely compact and thus easy to install on complex machines, in particular machines designed to handle bottles, vials, ampoules, bags, pouches, etc... closure elements such as caps, capsules, undercaps, etc... squeeze droppers, syringes and so on.

A further object of the invention is to provide a rotation input and output system for two concentric shafts which is reliable.

Said objects are all achieved by the rotation input and output system for two concentric shafts to which the present invention relates, which is characterized as described in the claims appended below.

### BRIEF DESCRIPTION OF THE FIGURES

These and other objects will become more apparent from the following description of an embodiment, illustrated solely by way of non-restrictive example in the appended drawings, in which:
- figure 1 illustrates a perspective view of the system according to the invention;
- figure 2 illustrates a sectional view relative to the axis C of the concentric shafts of figure 1;
- figure 3 illustrates a sectional view relative to the drive axis B of figure 1;

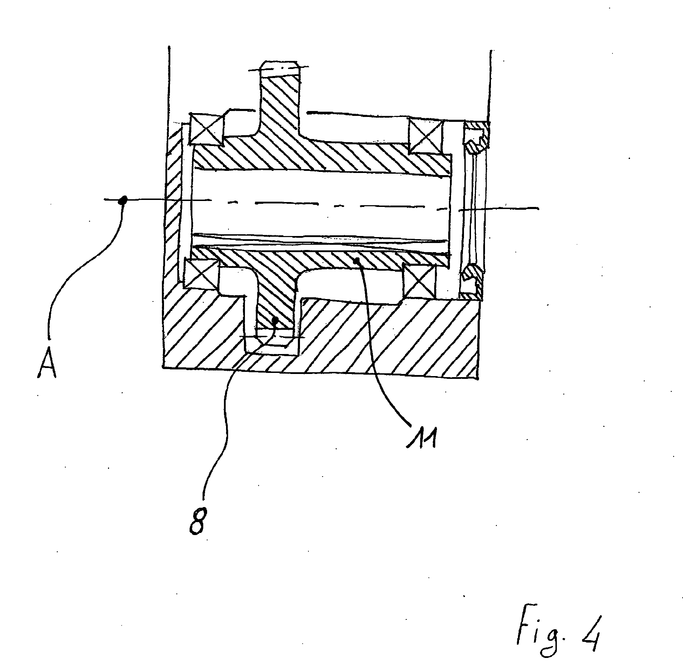

- figure 4 illustrates a sectional view relative to the input axis A of figure 1;

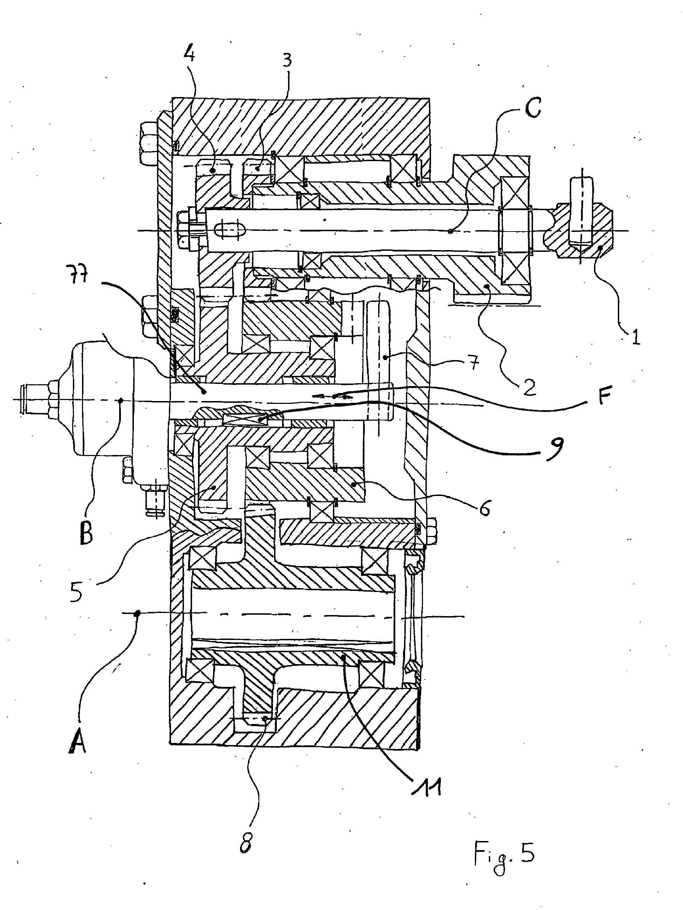

- figure 5 illustrates an overall sectional view of the system of figure 1.

### DESCRIPTION OF THE INVENTION

With particular reference to the figures, the number 1 indicates a first concentric shaft to be activated, specifically, the shaft with synchronous rotation driven by a motorized shaft 11, also called input shaft, whereas the number 2 indicates a second shaft or concentric pin having constant rotation by virtue of the motion transmitted by the motorized shaft 11.

There is also present a fourth shaft, called the pin shaft or drive shaft 77.

The system according to the invention comprises a first gear 4 integral with the first concentric shaft 1, a second gear 3 integral with the second concentric shaft 2, a third gear 5 integral with the drive shaft 77 and having the possibility of idle or driven operation, and a fourth driven gear 6. The number 7 indicates a clutch pin serving to couple and decouple said third gear 5 to and from said fourth gear 6.

The axes of the above-mentioned shafts are indicated with the letters A, B and C and precisely the letter A indicates the driving axis of the motorized shaft 11, the letter B indicates the axis of the drive shaft 77 and the letter C indicates the axis of the concentric shafts 1, 2.

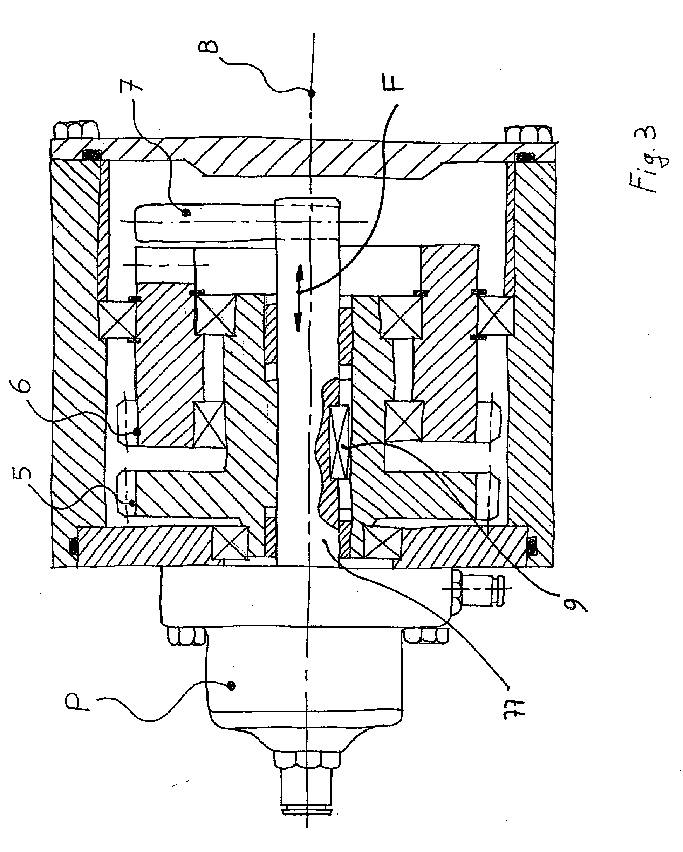

With particular reference to figure 3, a pneumatic driver is indicated with the reference P and it actuates the drive shaft 77 in such a manner that the third gear 5 receives motion from the fourth gear 6. The technical effect of the pneumatic driver P is thus to render synchronous the rotation of the concentric shafts 1, 2 by engagement of the above-indicated gears 5,6 by means of the engagement of the pin 7 within a special seat 6A of the fourth gear 6. In the preferred embodiment illustrated here, the pneumatic driver P is realized by means of an actuator, preferably a pneumatic cylinder, which is operatively active upon the drive shaft 77 in such a way as to move it alternately (see arrow F in figure 3) between a rest configuration, wherein the pin 7 is not engaged within said seat 6A of the fourth gear 6, and an operative configuration, wherein said pin is engaged and motion is thus transmitted to the concentric shafts 1, 2.

### DESCRIPTION OF OPERATION

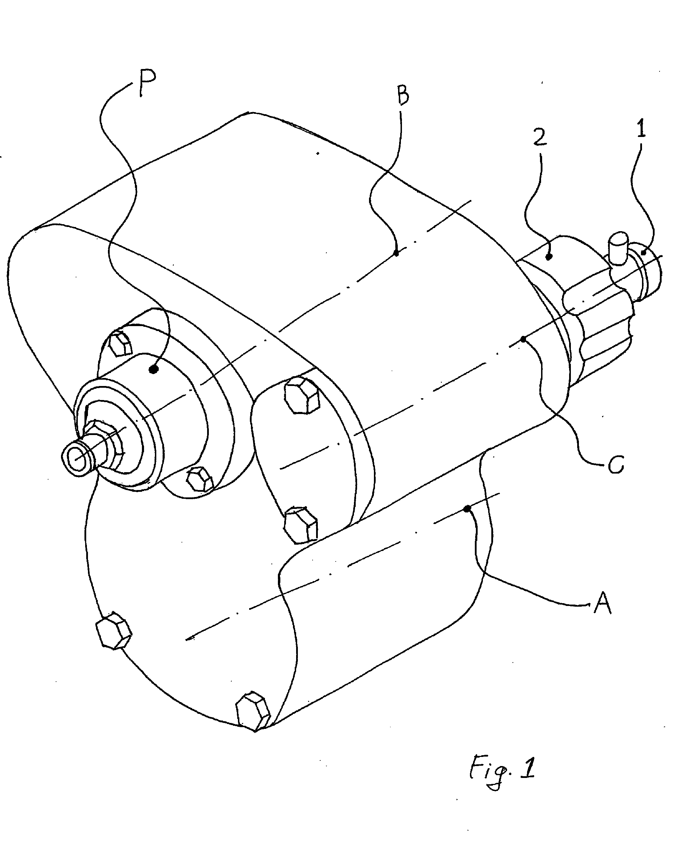

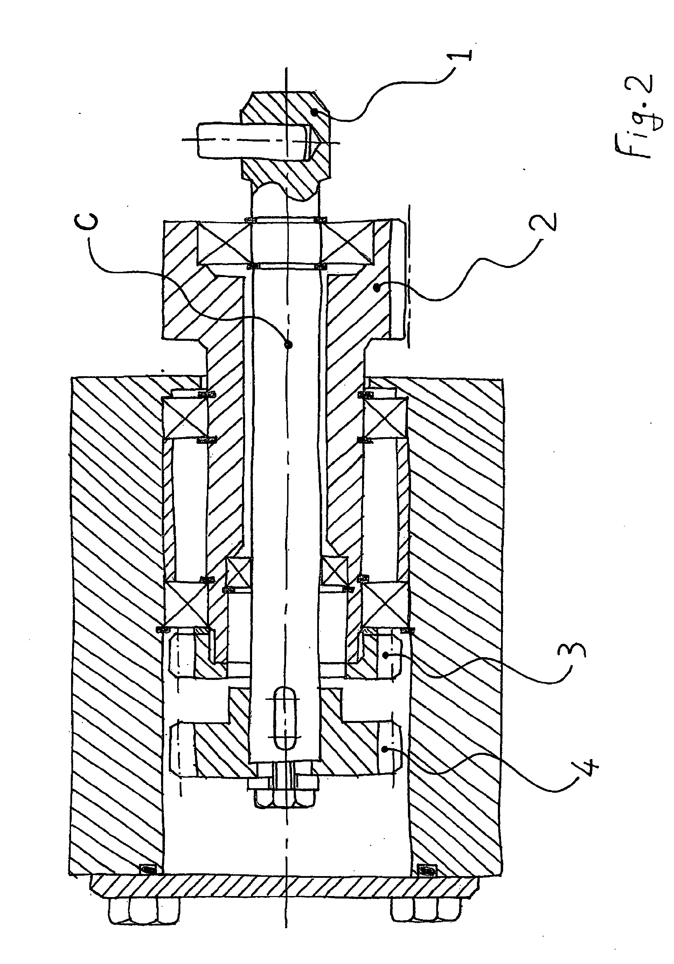

Upon receiving motion from the input shaft 11 (whose axis is identified with the letter A) via a fifth gear 8, the fourth gear 6 (whose axis of rotation coincides with the rotation axis B of the drive shaft 77), transmits the motion to the gear 3 keyed onto the second concentric shaft 2 (whose axis is identified with the letter C, as shown in figures 1 and 2): as a result, the second shaft 2 is constantly in motion.

The pneumatic driver P, oriented according to the rotation axis indicated with the letter B, moves drive shaft 77 in the direction indicated by the arrow F, thus enabling the pin 7 to be inserted into the individual seat 6A provided in the fourth gear 6. Following engagement of the pin 7, motion is drivingly transmitted to the gear 5 integrally keyed onto said drive shaft 77 (in the example by means of the feather/key 9). In this manner, the third gear 5 meshes with the first gear 4, thereby transmitting motion to the first shaft 1, which is rotating around the axis C. Consequently, the first shaft 1 being concentric and coaxial with the second shaft 2, it follows that said first shaft 1 drivingly engages/disengages with or from the second shaft 2, rotating in synchrony with the latter. The motion input on the axis A is therefore divided into two on the axis B and then returns onto the axis C.

In the example illustrated, the axes A, B and C are parallel.

Ultimately, the system is driven solely by a pneumatic element for engaging or disengaging the rotation of the third and fourth gears 5, 6 and hence of the concentric shafts 1, 2.

The system conveniently uses a single rotating shaft 11 for inputting motion; the motion is subsequently divided into two within the two concentric shafts 1, 2, it being possible to disengage one of the two.

## Claims

1. A rotation input and output system for two concentric shafts (1, 2), comprising:
a first shaft (1);
a second shaft (2) concentric with said first shaft (1), said second shaft undergoing constant rotation;
means for engaging and/or disengaging the rotation of said concentric shafts (1, 2), said means being operatively active on driving gears (3, 4, 5, 6) of said concentric shafts,
**characterized in that** said means for engaging and/or disengaging the rotation of said concentric shafts (1, 2) comprise a pneumatic actuator operatively associated with said driving gears in order to activate/deactivate a synchronous rotation thereof so that, when said actuator is in an active configuration, said second shaft (2) transmits rotation to said first shaft (1).

2. System according to claim 1, wherein said gears comprise:
a first gear (4) integrally keyed onto said first shaft (1);
a second gear (3) integrally keyed onto said second shaft (2);
a third gear (5) meshing with said first gear (4);
a fourth gear (6) meshing with said second gear (3), said fourth gear (6) rotating constantly so that said second gear (3) causes said second shaft (2) to undergo constant rotation;
a drive shaft (77) coaxial with said third and fourth gear (5, 6) and integrally linked to said third gear (5), said drive shaft having a clutch pin (7),
said pneumatic actuator being operatively active on said drive shaft (77) in such a way as to move it alternately between at least one position of disengagement of said pin from a seat (6A) of said third gear (6) and one position of engagement of said pin within said seat (6A) so that said third and fourth gear (5, 6) rotate in synchrony.

3. System according to any of the preceding claims, further comprising a motorized shaft (11) kinematically connected to said second shaft to keep it constantly rotating.

4. System according to claim 3, wherein said first, second and third shafts and said motorized shaft (1, 2, 77, 11) have rotation axes that are substantially parallel.

5. System according to any of claims 3 or 4, further comprising a fifth gear (8) integrally keyed onto said motorized shaft (11) and meshing with said fourth gear (6) so as to transmit motion to said second shaft (2) by further meshing of said fourth gear (6) with said second gear (3).
